# EUROPEAN PATENT SPECIFICATION

(11) **EP 3 486 387 B1**
(45) Date of publication and mention of the grant of the patent: **09.09.2020**
(21) Application number: 18460024.5
(22) Date of filing: 25.04.2018
(51) Int. Cl.: E04B 1/04, E04B 1/61, E01C 11/14, E04B 1/41, E04B 1/48, F16B 5/00

(54) **CONNECTING KIT FOR PREFABRICATED PANELS AND FASTENING METHOD USING SUCH KIT**
VERBINDUNGSKIT FÜR VORGEFERTIGTE PLATTEN UND BEFESTIGUNGSVERFAHREN MIT SOLCHEM KIT
KIT DE CONNEXION POUR PANNEAUX PRÉFABRIQUÉS ET PROCÉDÉ DE FIXATION UTILISANT UN TEL KIT

(30) Priority: 11.05.2017 PL 42156417
(43) Date of publication of application: 22.05.2019
(73) Proprietor: Gerard Spolka z o.o., 62-000 Rokietnica (PL)
(72) Inventor: Lech, Wojtasik, 64-930 Dolaszewo (PL)
(74) Representative: Hudy, Ludwik

(56) References cited:
- WO-A2-2011/123873
- DE-U1- 8 715 783
- GB-A- 2 028 958
- JP-A- 2002 030 729
- US-A- 5 761 862

## Description

The present invention consists of a connecting kit for fastening prefabricated panels (first and foremost including precast ferroconcrete panels) and the method of fastening prefabricated panels (first and foremost including precast ferroconcrete panels) using the connecting kit, intended for various forms of the construction industry in which prefabricated panels in general (and concrete panels in particular) are used.

In order to ensure more convenient, joint fixing of modular construction elements, as well as in order to ensure structural tightness, their contact surfaces with other elements are fitted with profiled recesses or protrusions, whose shape matches that of the recess or protrusion in the mating element. Such a solution has been used for years. Furthermore, modular construction elements are often fitted with through holes to be filled with a joining medium. Such joining medium may be e.g. liquid concrete or any plug connector, formed by a plug socket and a correspondingly shaped plug.

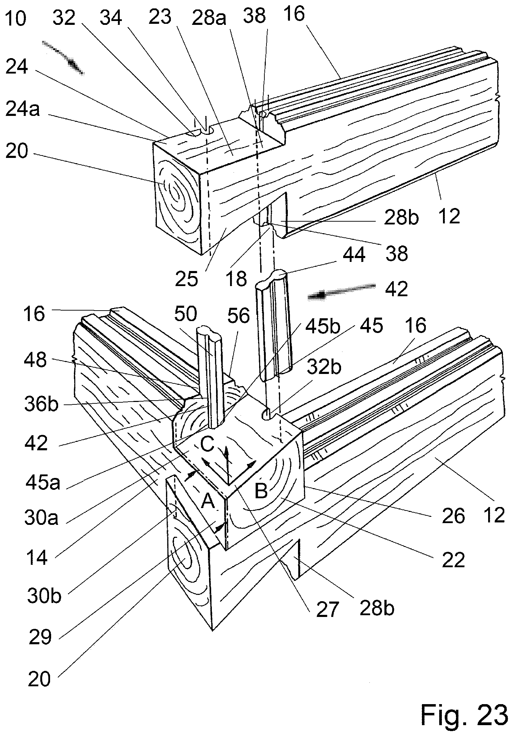

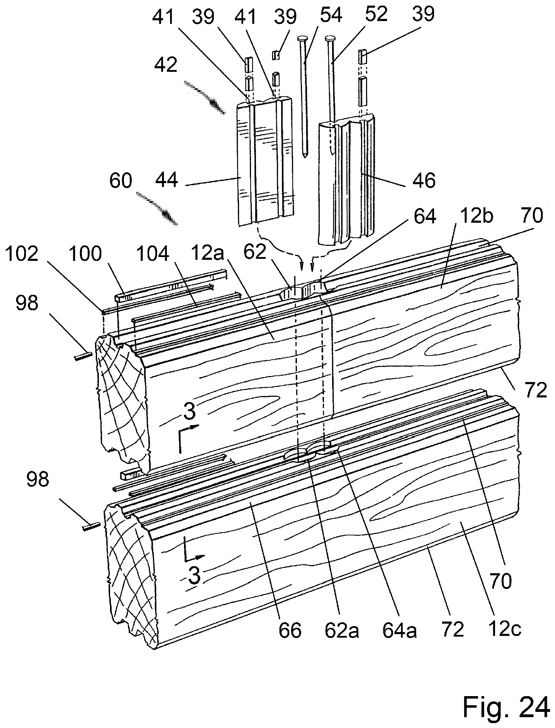

For instance, the Canadian patent description No. CA.1242558 (A), presented in Fig. 23, 24, teaches a system for quick and durable fastening of a modular house made of wooden logs, where the ends of adjacent logs are adequately profiled and end-joined; furthermore, the logs are connected by means of cylindrically elongated cavities that serve as sockets in which wooden connectors (serving as shafts) are set and which fit perfectly as they are being hammered in.

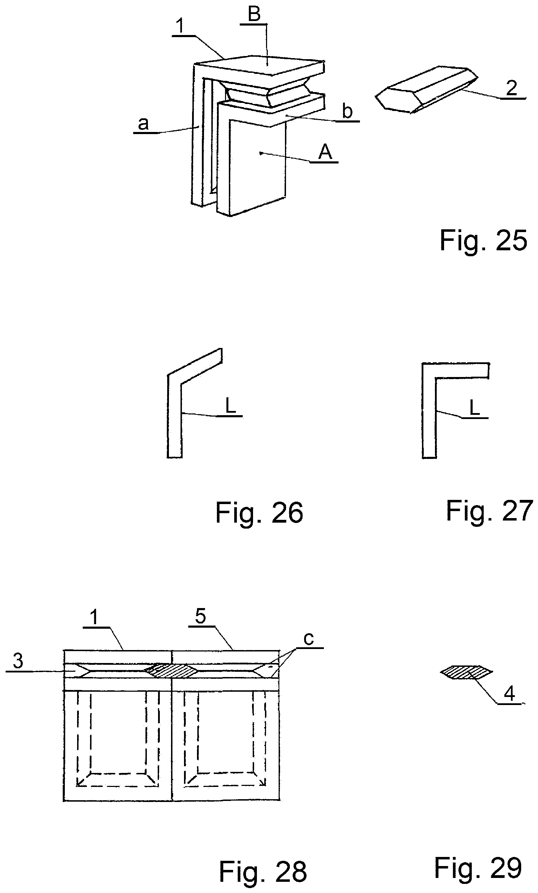

In its turn, the Polish patent description No. PL 179763 teaches a wall-and-ceiling construction kit presented in Fig. Figs. 25, 26, 27, 28 and 29, consisting of a prefabricated module (1) and connectors. The module (1) is formed as two inseparable panels: a wall (A) and a ceiling (B), positioned at an angle of at least 90° to each other, while their height and width are many times greater than their thickness. The narrow front surface (a) and the narrow lateral surfaces (b) of the module (1) that may possibly be in contact with similar modules are fitted with ducts (open on the outside) for fitting connectors of the modules (1). The prism-shaped connectors exactly reflect the shape of the ducts in the module (1) and can simultaneously fill ducts in two adjacent, contacting modules (1).

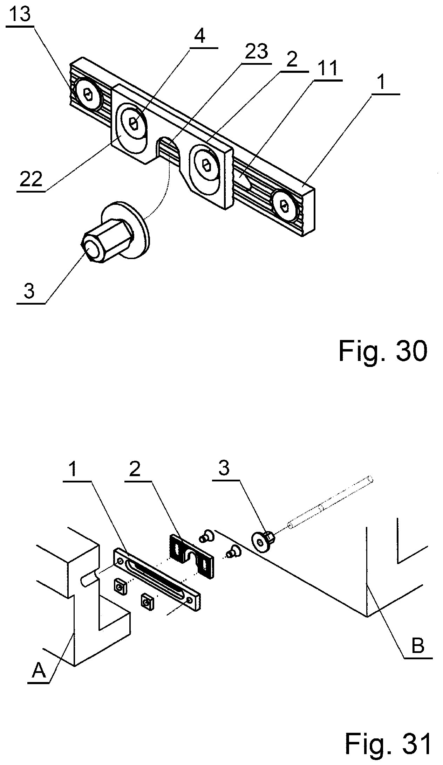

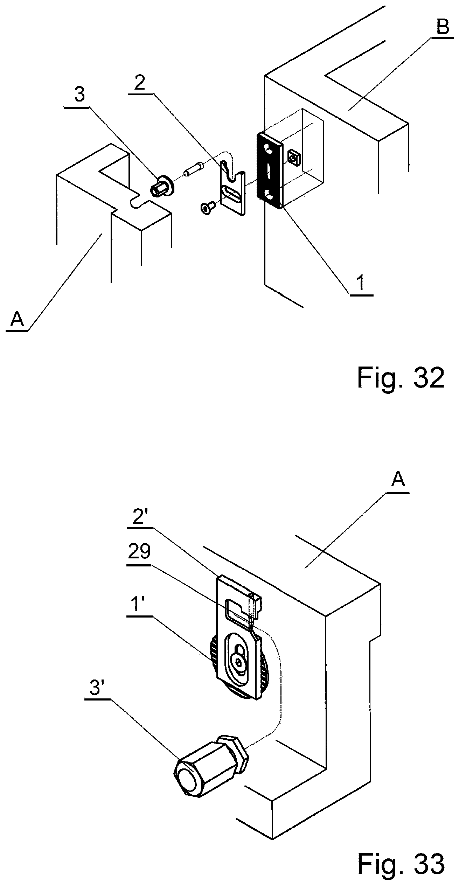

The Polish patent description No. PL 215834 (B1) teaches a kit for fastening facade panels, as shown in Fig. 30, 31, 32 and 33, consisting of supports and connectors, connected by means of grooved surfaces and fitted with adjustment openings, detachably connected to the building walls and facade panels and/or lintels and door frames. In the said kit, a load-bearing support (1) preferably is a cuboid-shaped panel with at least one oval opening (11) with a socket on the smooth-surface side, inside which at least one nut is placed, which - by means of a fastening screw (4) connects a hanger connector (2) with the load-bearing support (1), fitted with at least one oval opening with a socket (22) on the smooth-surface side, whereby the hanger connector (2) has a cutout (23), preferably U-shaped and with oblique lower edges, whereby the cutout (23) has a socket (on the grooved side of the hanger connector (2)) inside which the flange of a hanger sleeve (3) is placed, fitted to a facade element or to the floor.

Another example of a connector for fastening construction panels is a fastening element known from the description of the Polish industrial design No. Rp. 16412, as shown in Fib. 34 and 35. The connector - in its top view - has the shape of a rectangle with a trapeze cutout the shorter base of which is directed towards the interior of the rectangle. The connector resembles a very low, wide and thick letter U. In its front view, the connector has the shape of a gently sinusoidal wave with three extremes.

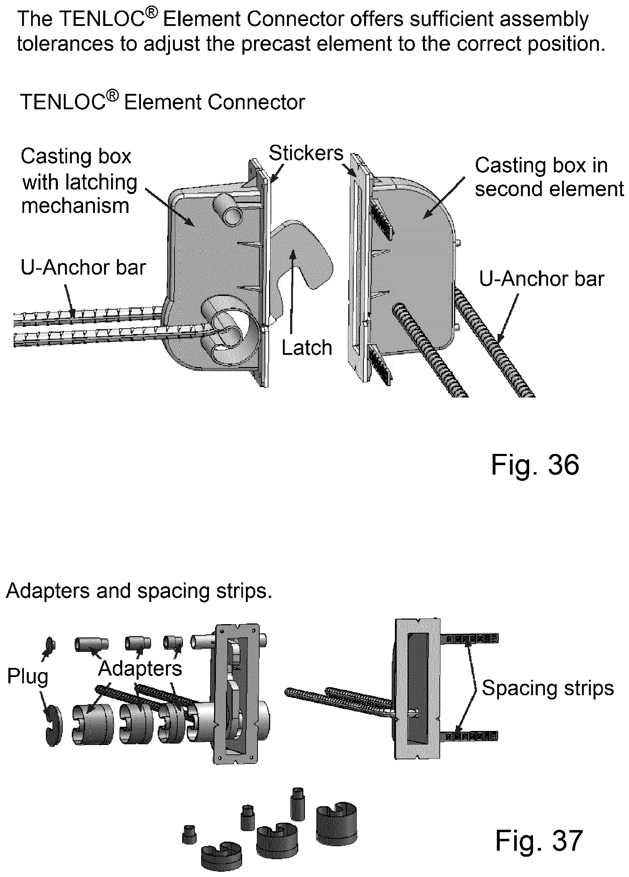

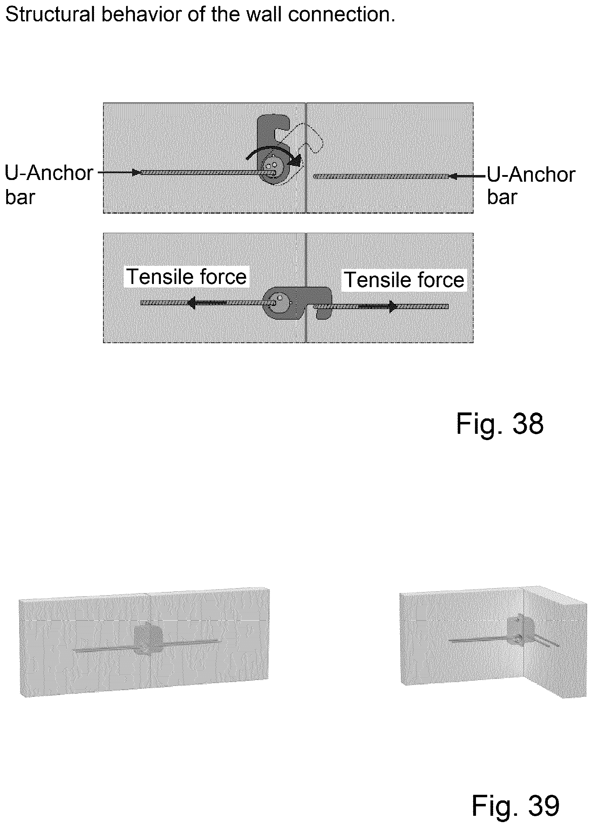

A fast connection presented in Fig. 36, 37, 38 and 39, is one of the newest solutions intended for more efficient and faster connection of precast elements, first and foremost fast connection of two vertical walls, corner connections and for connecting columns. It was disclosed in October 2015 in a brochure entitled "TENLOC Element Connector. Fast connection for precast elements", and then in April 2016 at the BAUMA trade show in Munich. The solution is intended for connecting precast wall elements, but can be equally successfully used for connecting walls with posts and for making assembly connections in panel systems, thus enabling instant connection of prefabricated elements. The system known commercially as TENLOC is a two-piece latching connector. One piece of the connector consists of a latching mechanism, installed in one precast wall element, in a specially profiled housing, inside which a bean-shaped (or croissant-shaped) adapter is positioned, in which a shape-matched connector is placed, through which a U-shaped anchor bar is guided. Furthermore, inside the housing there is a latch with an eccentric connection, serving as a locking lever whose coupling is formed so as to freely pass through a gap in the housing of the other piece of the unit, installed in another precast element and to lock against the anchor element, thus preventing backward movement of that element. The coupling, together with reinforcing bars and spacing strips, constitutes concrete reinforcement. By coupling the latching mechanism with the anchor, the connection between the two precast elements is strengthened.

The entire unit can be connected by means of a pair of connectors. Subsequently, the connectors are filled with non-shrinkable grout to finalize the connection.
Already in the precasting plant both parts of the unit are placed in moulds prior to casting. Simultaneously, special markings and spacing strips are placed on the housing of the latching mechanism and on the housing of the anchoring system, to facilitate precise positioning.
On an assembly site, immediately before connecting two precast wall elements, an assembler activates the latching system by means of a hexagonal key (commonly known as Allen key or hex key) through an opening in the mould, thus locking the latch on reinforcing bars on the opposite side. The assembler initiates the actual process of tensioning the bars by further turning the key after locking the latch, thus ensuring a robust connection between the connected walls, free of thermal bridges.

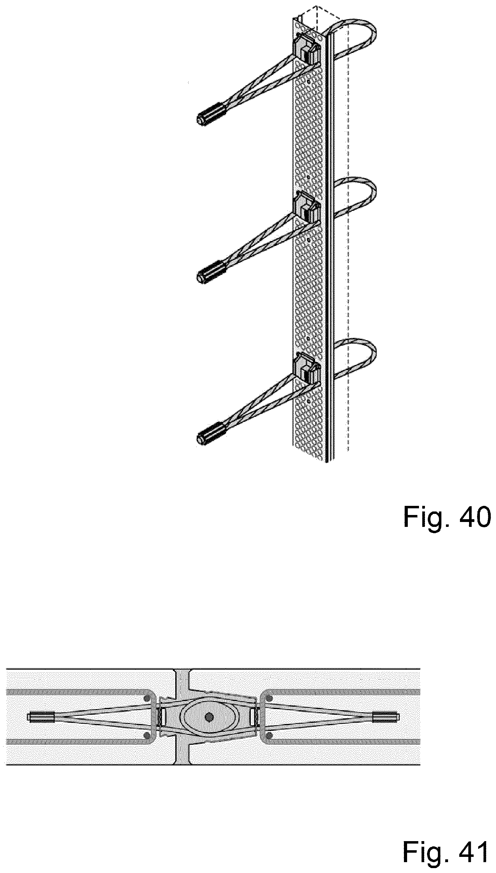

In the recent years, prefabricated construction panels have been increasingly often connected by means of loop connections. An example of such a connection is presented in Fig. 40 and 41. The best known manufacturers of those connections are PFEIFER and HALFEN. Fig. 40 and 41 show the design and method of use of a connection offered by PFEIFER and marketed as VS® PFEIFER System.
HALFEN offers a very similar system, commercially known as HLB. Rope loop connections are common in prefabricated walls (fire walls, curtain walls, load-bearing walls) connected with posts or in walls connected to other walls. The sides of wall panels connected with one another are fitted with steel rope loops, protruding to the outside. In order to connect the panels, they need to be positioned so that the loops overlap, following which an essentially vertical reinforcing bar is placed inside the connection and concrete mortar is poured over it.

The working principle of the connection is based on the fact that tensile stresses are taken over by the overlapping steel loops and by the vertical bar placed inside the connection. Compressive stresses are transferred by a highly resistant expansive mortar that tightly fills the resultant dowel "lock".
For the time of assembly and concrete curing, a screw joint connection should be provided and removed afterwards.
In this solution, some inconvenience is caused by the fact that the system requires formwork and a preliminary screw connection, and a relatively large quantity of concrete is consumed on the assembly site. Moreover, WO 2011/123873 A2 discloses a connecting kit for fastening precast panel elements and a method of connecting precast panel elements using such a connecting kit

The purpose of the present invention was to develop a connection for prefabricated construction panels ensuring robust and durable connection of wall and ceiling elements with minimum effort.

The object of the present invention is a connection kit for fastening precast ferroconcrete elements with the features of claim 1, consisting of a three-piece connector, whose one piece is placed in the structure of one precast element, and another piece is placed in the structure of another precast element, fitted with a plug socket and a shape-matched plug connector which unites the two precast elements by fitting into the socket.

The essence of the solution according to the present invention is that the kit consists of two plug sockets positioned in the two precast elements to be connected and one flat plug connector, whereby each plug socket is fitted with a flat rectangle-shaped element positioned in that part of the housing that is flush with the outer surface of the element being connected and has an internal gap that optionally can have smooth or grooved surface, whose shape matches a half of the plug connector. The shape of the plug connector resembles a very low, wide and thick letter U with the profile of a sinusoidally bent plane; the cross-section of the connector has the shape of a wedge tapering towards the end that is hammered into plug sockets. Furthermore, inside a recess formed in the lower part of the plug socket, located inside an element to be connected, the socket has a semicircular cavity. The cavity makes it possible to place a reinforcing bar securing the ferroconcrete structure against delaminating.
The part of the plug socket that is located inside an element to be connected is finished with flat elements whose width is not greater than the width of the gap housing. The purpose of those elements is to protect the socket against being pulled out from the precast element.
Importantly, all elements of the plug socket jointly form a module which - once supplemented with a suitable adapter - can be used for connecting corner elements.
To enable the connection of precast elements that are perpendicular to each other, one socket of the connection kit has a different design, supplemented with additional components constituting an adapter. The basic additional element is a cuboid chamber. One of its walls is formed by a flat element of the plug socket, whereas another, opposite wall is empty and constitutes a rectangular opening in a flat rectangular element connected with the chamber, flush with the side surface of a precast element to be connected. The constituent parts of this variety of the plug socket include a set of wedges which constitute the filling of the cuboid chamber of the plug socket after having been hammered inside it.
The plug connector is preferably made of high-quality steel.
Similarly, plug sockets are preferably made of high-quality and high-strength plastics or metal.
Each plug socket can be additionally reinforced with a rectangular metal plate the surface of which is perpendicular to the surface of the flat element of the socket, and thus in the contact surface of the two sockets, whereby the reinforcing plate and the flat element of the socket have a joint edge.
In the upper part of each of the rectangular reinforcing metal plates there is a narrow gap whose width and height match those of the internal gap of the socket.
Furthermore, each of the plug sockets can be fitted with reinforcements in the form of longitudinal reinforcing bars connected at one end with the metal plates, as well as in the form of crosswise reinforcing bars, whereby the free ends of the bars are bent downward in a hook-like fashion and can be connected with reinforcements of precast elements to be connected.
The object of the present invention additionally includes the method of connecting precast panels using the kit described above, the method comprising the features of claim 10. The essence of the connection method according to the present invention consists in the following:
- at a preliminary stage, already in the precasting plant, at least one plug socket (optionally a plug socket constituting the basic module or a socket using the basic module with an adapter) is inserted inside the structure of each precast element depending on its intended use and function (in-line or corner element), such socket being inserted so that the line that goes along the contact edge of the connected elements is their axis of symmetry,
- on the construction site, immediately prior to connecting two adjacent precast elements, those elements are placed in relation to each other so that the plug sockets are positioned on the opposite sides in the contact plane of the elements to be connected,
- in order to connect the elements, a connector is hammered into the gap with the profile of a sinusoidally bent plane formed by the connection of two gaps upon combining the two plug sockets embedded in the two prefabricated elements to be connected.
- if the elements to be connected are perpendicular to each other, the connector is hammered in with the help of a set of wedges that are hammered inside the cuboid chamber of the plug socket.

The application of the connection kit for fastening precast ferroconcrete elements according to the present invention eliminates the need for on-site wet works, i.e. the need to use liquid mortar, as well as welding or joining by means of screw connections. The kit ensures highly precise, easy and fast installation of building elements (the calculated time of securing such connection does not exceed 10 minutes of an assembler's work, whereas the time necessary to hammer in the plug connector is as little as a few seconds), which in its turn makes the construction of the entire building less time consuming. It constitutes a durable and elastic connection of adjacent ferroconcrete panels, stabilizing their position and tightening the connected elements. The metal connector with the profile of a sinusoidally bent plane, hammered into connecting sockets placed in the structure of adjacent ferroconcrete elements, is a kind of a wall plug. It is fully capable of transmitting loads immediately after deployment. Furthermore, the kit's application minimizes the presence of thermal bridges in external layered walls.

In addition, an unquestionable advantage of the connection kit is the low cost of such connection, because the simple design and the relatively small amount of material consumed (in the case of connecting sockets - high-quality and high-strength plastics, and in the case of the connector - a high-grade steel) will not only contribute to low manufacturing cost, but will also constitute an advantage from the perspective of the building's investor, by reducing the overall cost of technology and by reducing construction time.
While the connection kit according to the invention is intended primarily for connecting ferroconcrete elements, it can also be used for connecting structural elements made of materials other than ferroconcrete. Namely, the connection kit is an all-purpose solution that can be used in various structural arrangements, in corner and parallel connections, equally for wall, floor or ceiling plates, or even foundation beams, or in balcony connections (to connect cantilever plates or to integrate cantilever plates with the ceiling plate).

An embodiment of the object of the present invention is presented in the drawing, individual figures of which demonstrate the following:

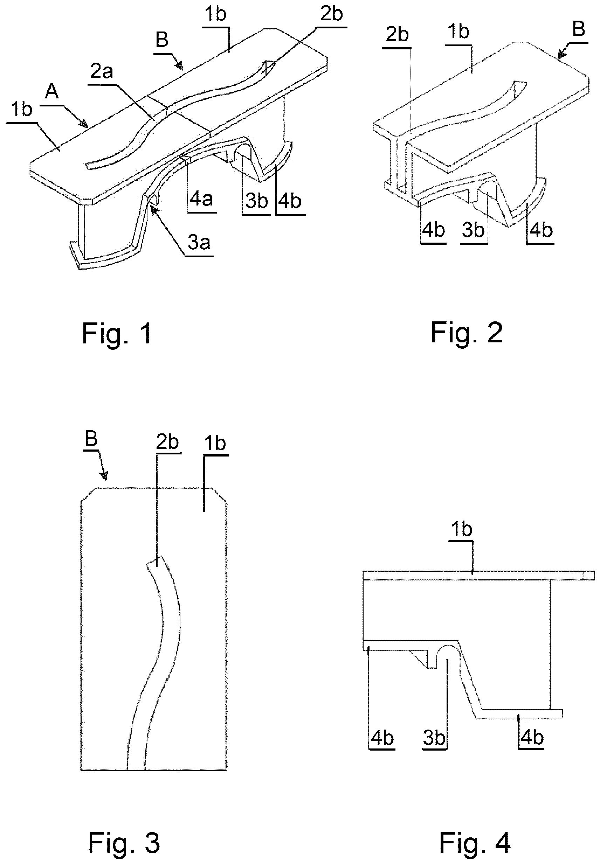

- Fig.1 -: axonometric projection of two adjacent plug sockets for connecting contacting prefabricated elements,
- Fig.2 -: axonometric projection of a plug socket;
- Fig.3 -: plug socket (top view);
- Fig.4 -: plug socket (side view);

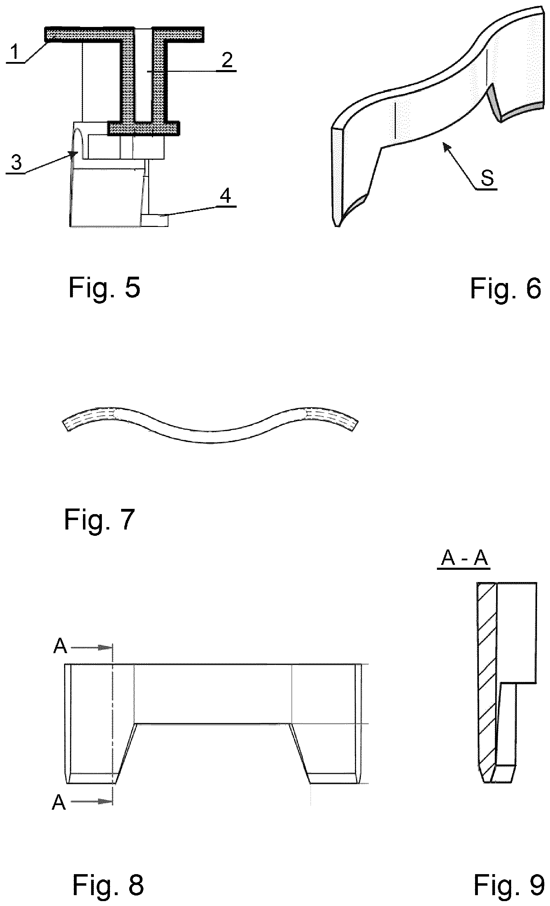

- Fig.5 -: plug socket (cross section);
- Fig.6 -: axonometric projection of a plug connector;
- Fig.7 -: plug connector (top view);
- Fig.8 -: plug connector (side view);
- Fig.9 -: plug connector (cross section);

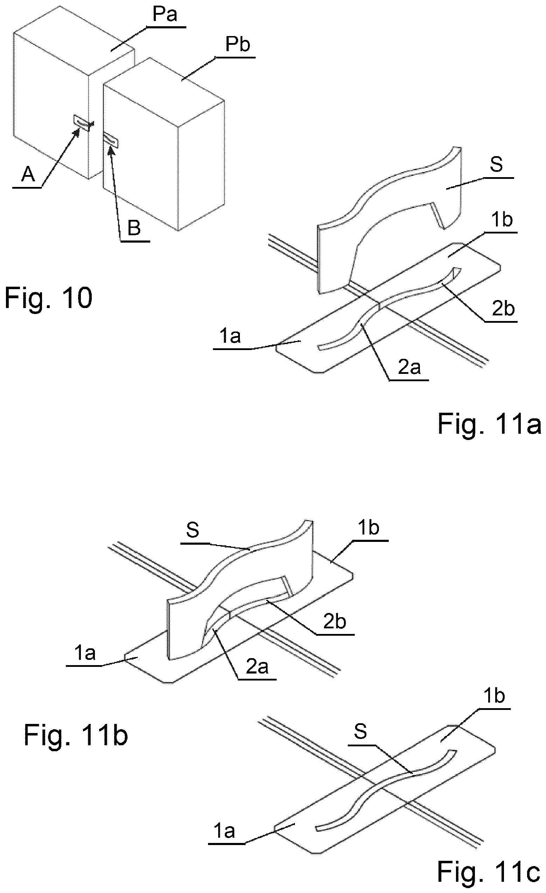

- Fig.10 -: connection diagram of prefabricated elements positioned in-line (axonometric projection)
- Fig.11 -: axonometric projection of three stages of inserting a plug connector with the profile of a sinusoidally bent plane in contacting plug sockets fitted in two adjacent prefabricated elements;

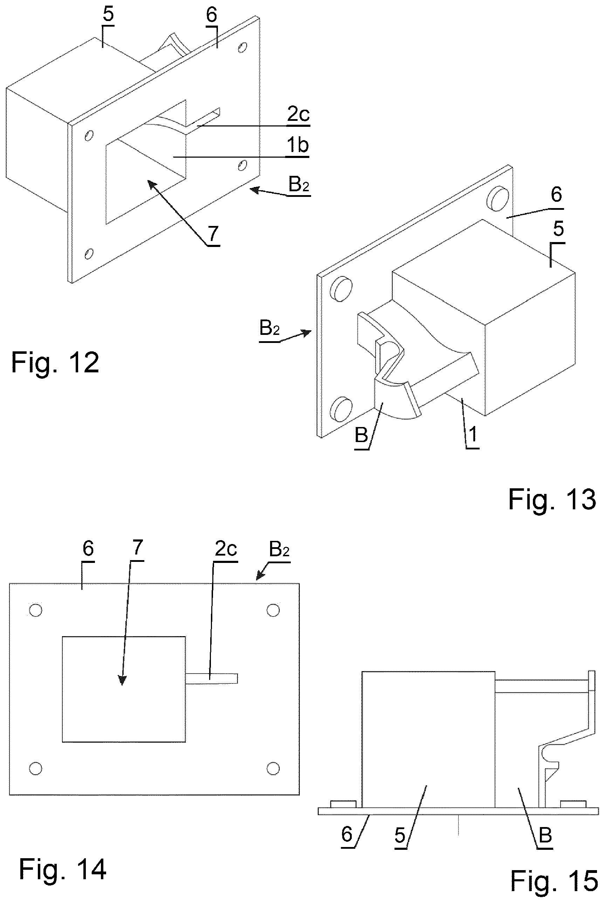

- Fig.12 -: plug socket intended for connecting prefabricated elements positioned perpendicular to each other (front axonometric projection);
- Fig.13 -: plug socket intended for connecting prefabricated elements positioned perpendicular to each other (rear axonometric projection);
- Fig.14 -: plug socket intended for connecting prefabricated elements positioned perpendicular to each other (side view);
- Fig.15 -: plug socket intended for connecting prefabricated elements positioned perpendicular to each other (top view);

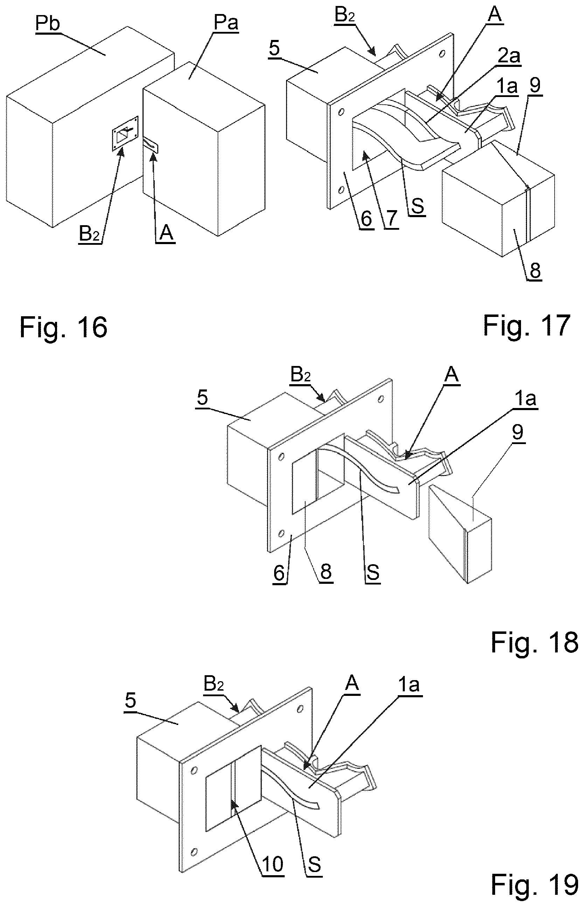

- Fig.16 -: connection diagram of perpendicular prefabricated elements (axonometric projection)
- Fig.17 -: connection kit intended for connecting prefabricated elements positioned perpendicular to each other, with two wedges (front axonometric projection);
- Fig.18 -: axonometric projection of a connection kit intended for connecting prefabricated elements positioned perpendicular to each other, with one wedge already hammered in and the other wedge ready for hammering;
- Fig.19 -: axonometric projection of a connection kit intended for connecting prefabricated elements positioned perpendicular to each other, with wedges already hammered in the plug socket;

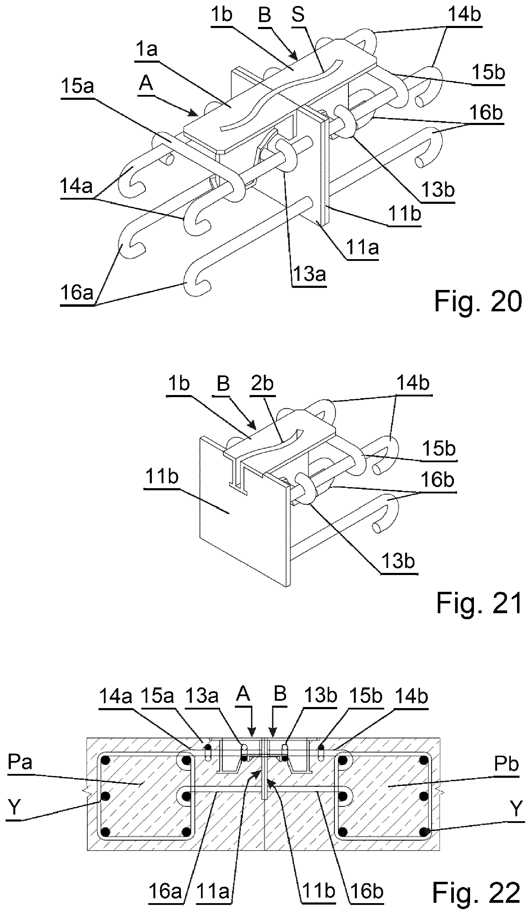

- Fig.20 -: axonometric projection of a connection kit in the form of two reinforced adjacent plug sockets for connecting contacting prefabricated elements;
- Fig.21 -: axonometric projection of a single plug socket, additionally reinforced;
- Fig.22 -: cross-section view of two ferroconcrete panels connected by means of an additionally reinforced connecting kit.

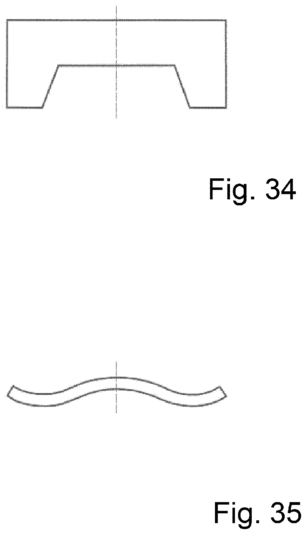

- Fig. 23-41: illustrate several solutions according to the state of the art.

A manufacturing plant producing prefabricated elements for the construction industry was asked to manufacture a certain number of ferroconcrete elements of an energy-saving passive fully-detached house. As part of the assignment, the plant was asked to install a system for fast and easy connection of individual panels with one another.

The connecting kit, consisting of a few components, had to be suitable both for in-line connection of two adjacent precast elements and for corner connections, i.e. those when two elements are perpendicular to each other.

### Embodiment I:

In the first embodiment of the connecting kit according to the invention, i.e. when the system is intended for in-line connections, the connecting kit consists of two plug sockets **A** and **B** installed in two precast panels **Pa** and **Pb** to be connected with each other and one flat plug connector **S.** Each of the plug sockets **A** and **B,** made of high-quality and high-strength plastics, is fitted with a flat element - **1a** in the case of socket **A** and **1b** in the case of socket **B.** Furthermore, both flat elements **1a, 1b** are rectangular in shape and are intended to be positioned in that part of the socket that is located in the external plane of the connected element **Pa, Pb.** Each of the plug sockets **A** and **B** has an internal smooth-surfaced gap **2a** and **2b,** shape-matched with a half of the plug connector **S,** allowing for the plug connector to be hammered in, whereby the width of the internal gap **2** gradually decreases in the direction in which the plug connector **S** is being hammered in.
The plug connector **S** has been made of a high-grade steel and resembles a very low, wide and thick letter U with the profile a sinusoidally bent plane; the cross-section of the connector has the shape of a wedge tapering towards the end that is hammered into the plug sockets **A, B.** The purpose of the plug connector **S** is to transfer stress to the walls of the gap **2,** simultaneously increasing the friction force and preventing the plug connector **S** from sliding out of the socket **A** and **B.**
Inside the recess formed in part of the plug socket **A, B,** located inside the connected element **Pa, Pb,** the socket has a semicircular cavity **3a, 3b** to accommodate a reinforcing bar. In its turn, the lower part of the plug socket **A, B,** located inside the connected element, terminates in flat protective elements **4a, 4b,** whose width is greater than the width of the housing of the gap **2a, 2b,** whose purpose is to prevent the socket from being pulled out from the ferroconcrete structure. Importantly, all elements of the plug socket **B** jointly constitute a basic module that can serve as a basic component of a plug socket of a different design.

### Embodiment II:

In another embodiment of the same variant of the invention, used for in-line connections, the connecting kit **Z** is also formed by two plug sockets **A** and **B,** placed inside two precast panel elements **Pa, Pb** to be connected with each other, and by one flat plug connector **S.** As in the first embodiment, each of the plug sockets **A** and **B** is fitted with a flat element - **1a** and **1b,** respectively, and each of the plug sockets **A** and **B** has an internal smooth-surfaced gap **2a** and **2b,** shape-matched with a half of the plug connector **S,** allowing for the plug connector to be hammered in, whereby the width of the internal gap **2** gradually decreases in the direction in which the plug connector **S** is being hammered in.
In the embodiment discussed here, each of the plug sockets **A, B** has additionally been reinforced by the addition of a rectangular metal plate **11a, 11b,** whereby the surfaces of both plates are in contact in the place where the plug socket **A** contacts the plug socket **B.** In the upper part of each of the plates **11a, 11b** there is a gap **12a, 12b,** whose width and height match those of the internal gap of the socket **2a, 2b;** it is formed so as to match the shape of the connector **S** hammered into it.
In addition, each of the plug sockets **A, B** has additionally been fitted with reinforcing elements that help strengthen the structure of the connection, in the form of adequately bent steel reinforcing bars.
Namely, crosswise reinforcing bars **13a, 13b** are guided in semicircular cavities **3a, 3b;** each bar is bent downward in a hook-like fashion and each supports two longitudinal bars suspended underneath. Two bars **14a** are hooked under the bar **13a,** and two bars **14b** are hooked under the bar **13b.** Each of the bars **14a** has one end that is bent downward in a hook-like fashion, whereas its other end is permanently fastened to the upper part of the plate **11a,** while each of the bars **14b** has one end that is bent downward in a hook-like fashion, whereas its other end is permanently fastened to the upper part of the plate **11b.** Furthermore, the bars **14a** (in the case of the plug socket **A**) and the bars **14b** (in the case of the plug socket **B**), are secured from the top with crosswise clamps **15a, 15b,** in the form of crosswise bars whose ends are bent downward in a hook-like fashion and are positioned in parallel to. The crosswise clamps **15a, 15b** are the bars **13a, 13b.**
The lower part of the plate **11a, 11b** of the plug sockets **A, B** is fastened to one end of two bars **16a** and **16b,** positioned in parallel to each other. The other end of each of those four bars **(16a, 16b)** is bent downwards in a hook-like fashion. The hook-like ends of the bars **14a, 14b,** and **16a, 16b** are hooked against reinforcing bars **Z** of the panel elements **Pa, Pb.**

### Embodiment III:

In the other variant of the invention, the plug socket **B,** constituting the basic module, has been used as the basis for a plug socket **B₂** intended for corner connections.
In this case, the plug socket **B,** constituting a module, adheres with its flat element **1b** to a cuboid chamber **5** embedded in the structure of a precast element. The flat element **1b** has an internal gap **2b,** shape-matched with a half of a sinusoidally shaped plug connector **S.** A rectangular flat element **6** is fastened to the wall of the cuboid chamber **5** located on the external plane of the precast element **Pb** intended to be connected. The surface of the flat element **6** has a rectangular opening **7.** The size of the rectangular opening **7** corresponds to the size of a set of two wedges **8** and **9** which - after having been hammered inside the cuboid chamber **5** formed a cuboid filling **10** of the chamber **5** in the plug socket **B₂.** Thanks to the wedges, hammering in the sinusoidally bent plug connector **S** into the gap **2** was easier, and the resulting filling **10** of the chamber **5** secured the plug connector **S** against sliding out.

Ferroconcrete precast elements with pre-installed connecting kits according to the invention were connected by the method according to the invention in a few stages.
At the preliminary stage, already in the precasting plant, two plug sockets were inserted on both sides of each precast element, depending on its intended use and function (i.e. parallel vs. corner element). Optionally these were the sockets **A** or sockets **B** or sockets **B₂.** Importantly, the line running along the contact edges of the connected elements constituted the axis of symmetry of the sockets.
On the construction site, directly before connecting two adjacent precast elements **Pa, Pb,** further assembly operations depend on whether the two precast elements are to be connected in parallel or perpendicular to each other.
In the first variant, i.e. in parallel connection, two plug sockets **A** and **B** must be embedded in the structure of precast elements **Pa** and **Pb.** Both elements **Pa, Pb** had to be positioned so that their plug sockets - i.e. the socket **A** and the socket **B** - were on the opposite sides in the contact plane of the connected elements.
Then, the connector **S** was hammered into the adequately profiled gap **2,** whose shape corresponded to the plug connector **S** with the profile of a sinusoidally bent plane, formed by the two connected gaps **2a** and **2b,** positioned in the contact plane of the two elements, created at the moment of connection of the two plug sockets **A** and **B,** embedded in the two precast elements **Pa, Pb.** The entire process of connecting the two elements took an assembler approximately 10 minutes.

The reinforced kit presented in the second embodiment was manufactured in the prefabrication plant by embedding two plug sockets **A** and **B** on both sides in the structure of each precast element **Pa, Pb.** Importantly, the plug sockets had been reinforced with rectangular plates **11a** and **11b.** Additionally, the connection between the plug sockets **A, B** with the structure of the precast elements **Pa, Pb** was reinforced by means of longitudinal bars **14a, 14b, 16a, 16b** clamped with crosswise bars - clamps **13a, 13b, 15a, 15b.** The said reinforcement was then connected with reinforcement Z of the precast concrete elements **Pa, Pb.** The on-site assembly operations were identical to those performed in the case of the first embodiment of the invention.

In the other variant (i.e. perpendicular connection), two plug sockets **A** and **B₂** were embedded in the structure of the two precast plate elements **Pa, Pb.** Both plug sockets were made of metal.
Two elements positioned in perpendicular to each other were connected by means of the same, all-purpose plug connector **S.** The process of hammering-in the connector **S** was facilitated by the use of the two wedges **8** and **9.** The wedges **8** and **9** were hammered in through the opening **7** to the inside of the cuboid chamber **5,** thus forming its filling **10.** The wedges **8, 9,** by fully filling in the cuboid chamber **5** of the plug socket **B₂,** ensured full deployment of the plug connector **S** which completely filled the gap **2a-2b** and thus connected the two perpendicular elements **Pa, Pb.**

### Key to figures:

- A -: plug socket for in-line connections,
- B -: plug socket for in-line connections,
- B₂ -: plug socket for corner (perpendicular) connections,
- Pa, Pb -: prefabricated elements to be connected
- S -: plug connector,
- Z -: reinforcement of the prefabricated element
- 1 -: flat rectangular element of the socket,
- 2 -: internal gap shape-matched with a half of the plug connector S,
- 3 -: semicircular cavity,
- 4 -: flat protective element,
- 5 -: chamber of plug socket B₂,
- 6 -: flat plate element of plug socket B₂,
- 7 -: chamber opening,
- 8 -: wedge,
- 9 -: wedge,
- 10 -: chamber filling 5,
- 11a -: rectangular metal plate for plug socket A,
- 11b -: rectangular metal plate for plug socket B,
- 12a -: gap in the rectangular metal plate for plug socket A,
- 12b -: gap in the rectangular metal plate for plug socket B,
- 13a -: crosswise reinforcing bar in plug socket A,
- 13b -: crosswise reinforcing bar in plug socket B,
- 14a -: longitudinal reinforcing bar in plug socket A,
- 14b -: longitudinal reinforcing bar in plug socket B,
- 15a -: crosswise reinforcing bar (clamp) in plug socket A,
- 15b -: crosswise reinforcing bar (clamp) in plug socket B,
- 16a -: longitudinal reinforcing bar in plug socket A,
- 16b -: longitudinal reinforcing bar in plug socket B.

## Claims

1. A connecting kit for fastening precast panel elements, constituting at least two-piece connection, one piece of which is positioned in the structure of one precast element and the other piece is positioned in the structure of an adjacent precast element, whereby such kit is fitted with a plug socket and a shape-matched connector which - by fitting in into the socket in use
- integrates the two precast elements, wherein the kit consists of two plug sockets **(A, B),** adapted to be respectively embedded in one of the two panel elements to be connected with each other **(Pa, Pb)** and one flat plug connector **(S)** resembling a very low, wide and thick letter U with the profile of a sinusoidally bent plane, whereby the cross-section of the connector has the shape of a wedge tapering towards the end that is hammered into plug sockets **(A, B),** while each of the plug sockets **(A, B)** is fitted with a rectangular flat element (**1a, 1b**) situated in the part of the socket that is located in the external plane of the precast panel element to be connected **(Pa, Pb)** and has an internal gap **(2a, 2b)** whose shape matches in use a half of the plug connector **(S),** whereas the part of the plug socket **(A, B)** located inside the element to be connected has a semicircular cavity **(3a, 3b)** to accommodate a reinforcing bar **(13a, 13b).**

2. A connecting kit according to claim 1 **characterized in that** its plug socket **(B)** and specifically its flat element (**1b**) touches a cuboid chamber **(5)** embedded in a panel element **(Pb),** constituting a side wall of the chamber **(5),** whereby the front plane of an empty wall of the chamber **(5),** also forming the external plane of the panel element **(Pb),** incorporates a rectangular flat plate element **(6)** whose rectangular opening **(7)** coincides with the surface of the front empty wall of the chamber (**5**).

3. A connecting kit according to claim 2 **characterized in that** the size of the rectangular opening **(7)** corresponds to the size of a two combined wedges **(8, 9)** which - after having been hammered inside the chamber **(5)** form a cuboid filling (**10**).

4. A connecting kit according to claim 1 or 2 **characterized in that** the gap **(2a, 2b)** has a smooth surface.

5. A connecting kit according to claim 1 or 2 **characterized in that** the gap **(2a, 2b)** has a corrugated surface.

6. A connecting kit according to claim 1 **characterized in that** each of the plug sockets **(A, B)** is fitted with an additional reinforcement in the shape of a rectangular metal plate (**11a**, **11b**), whose surface is perpendicular to the surface of a flat element (**1a**, **1b**), thus forming a contact plane of the two plug sockets **(A, B).**

7. A connecting kit according to claim 6 **characterized in that** the upper part of each of the rectangular metal plates (**11a**, **11b**) has a narrow gap **(12a, 12b),** whose width and height correspond to those of the internal gap **(2a, 2b).**

8. A connecting kit according to claim 6 **characterized in that** each of the plug sockets **(A, B)** is fitted with reinforcing elements made of longitudinal reinforcing bars **(14a, 14b, 16a, 16b)** whose one end is connected to the metal plates (**11a**, **11b**) and of crosswise reinforcing bars **(13a, 13b, 15a, 15b),** whereas the free ends of all bars are bent in a hook-like fashion.

9. A connecting kit according to claim 8 **characterized in that** the reinforcement of the plug sockets **(A, B)** is connected with a reinforcement **(Z)** of the panel elements **(Pa, Pb).**

10. A method of connecting precast panel elements using the connecting kit according to claims 1 through 9 wherein it consists of the following stages:
- at a preliminary stage, already in the prefabrication plant, at least one plug socket (optionally socket **(A)** or socket **(B)** or socket **(B₂)** constituting the basic module or a socket using the basic module with an adapter) is inserted inside the structure of each precast element depending on its intended use and function (parallel element or corner element), such socket being inserted so that the line that goes along the contact edge of the connected elements is their axis of symmetry,
- on the construction site, immediately prior to connecting two adjacent precast elements, those elements are placed in relation to each other so that their plug sockets - socket **(A)** or socket **(B)** or socket **(B₂)** are positioned on the opposite sides of their symmetry plane and are positioned in the contact plane of the elements to be connected,
- in order to connect the elements, the connector **(S)** is hammered into profiled gap whose shape matches the plug connector **(S),** whereby the said gap is formed by the two connected gaps **(2a)** and **(2b),** positioned in the contact planes of the two elements, whereas additionally in the case of connecting perpendicular elements the process of hammering-in the connector **(S)** is facilitated by the use of two additional wedges **(8, 9)** which are hammered in through an opening **(7)** to the inside of the cuboid chamber **(5),** thus forming its filling **(10).**

## Patentansprüche

1. Einer Verbindungssatz zur Befestigung von Fertigteilelementen, das mindestens eine zweiteilige Verbindung darstellt, von denen ein Teil in der Struktur eines Fertigteilelementes und das andere Teil in der Struktur eines benachbarten Fertigteilelementes positioniert ist, wobei dieses Kit mit einer Steckdose und einem formgerechten Stecker ausgestattet ist, der - durch den Einbau in die verwendete Steckdose - die beiden Fertigteilelemente integriert, wobei der Bausatz aus zwei Steckdosen (A, B), angepasst, um in eines der beiden miteinander zu verbindenden Paneelelemente eingebettet zu werden (Pa, Pb) und einen Flachsteckverbinder (S), der einem sehr niedrigen, breiten und dicken Buchstaben U mit dem Profil einer sinusförmig gekrümmten Ebene ähnelt, wobei der Querschnitt des Verbinders die Form eines Keils hat, der sich zum Ende hin verjüngt und in Steckerbuchsen (A, B) eingeschlagen wird, während jede der Steckerbuchsen (A, B) mit einem rechteckigen flachen Element (1a, 1b) versehen ist, das sich in dem Teil der Buchse befindet, der sich in der äußeren Ebene des zu verbindenden vorgefertigten Plattenelements (Pa, Pb) befindet und einen inneren Spalt (2a, 2b) aufweist, dessen Form im Gebrauch einer Hälfte des Steckverbinders (S) entspricht, während der Teil der Steckerbuchse (A, B), der sich im Inneren des zu verbindenden Elements befindet, einen halbkreisförmigen Hohlraum (3a, 3b) zur Aufnahme eines Verstärkungsstabs (13a, 13b) aufweist.

2. Der Verbindungssatz nach Anspruch 1, **dadurch gekennzeichnet, dass** seine Steckerbuchse (B) und insbesondere sein flaches Element (1b) eine quaderförmige Kammer (5) berührt, die in ein Plattenelement (Pb) eingebettet ist, das eine Seitenwand der Kammer (5) bildet, wobei die vordere Ebene einer leeren Wand der Kammer (5), die auch die äußere Ebene des Plattenelements (Pb) bildet, ein rechteckiges flaches Plattenelement (6) enthält, dessen rechteckige Öffnung (7) mit der Oberfläche der vorderen leeren Wand der Kammer (5) zusammenfällt.

3. Der Verbindungssatz nach Anspruch 2, **dadurch gekennzeichnet, dass** die Größe der rechteckigen Öffnung (7) der Größe von zwei kombinierten Keilen (8, 9) entspricht, die nach dem Einschlagen in die Kammer (5) eine quaderförmige Füllung (10) bilden.

4. Der Verbindungssatz nach Anspruch 1 oder 2, **dadurch gekennzeichnet, dass** der Spalt (2a, 2b) eine glatte Oberfläche aufweist.

5. Der Verbindungssatz nach Anspruch 1 oder 2, **dadurch gekennzeichnet, dass** der Spalt (2a, 2b) eine gewellte Oberfläche aufweist.

6. Der Verbindungssatz nach Anspruch 1, **dadurch gekennzeichnet, dass** jede der Steckerbuchsen (A, B) mit einer zusätzlichen Verstärkung in Form einer rechteckigen Metallplatte (11a, 11b) versehen ist, deren Oberfläche senkrecht zur Oberfläche eines flachen Elements (1a, 1b) steht und somit eine Kontaktebene der beiden Steckerbuchsen (A, B) bildet.

7. Der Verbindungssatz nach Anspruch 6, **dadurch gekennzeichnet, dass** der obere Teil jeder der rechteckigen Metallplatten (11a, 11b) einen schmalen Spalt (12a, 12b) aufweist, dessen Breite und Höhe denen des inneren Spaltes (2a, 2b) entspricht.

8. Der Verbindungssatz nach Anspruch 6, **dadurch gekennzeichnet, dass** jede der Steckerbuchsen (A, B) mit Verstärkungselementen aus Längsverstärkungsstäben (14a, 14b, 16a, 16b), deren eines Ende mit den Metallplatten (11a, 11b) verbunden ist, und aus Querverstärkungsstäben (13a, 13b, 15a, 15b) versehen ist, während die freien Enden aller Stäbe hakenförmig gebogen sind.

9. Der Verbindungssatz nach Anspruch 8, **dadurch gekennzeichnet, dass** die Verstärkung der Steckbuchsen (A, B) mit einer Verstärkung (Z) der Plattenelemente (Pa, Pb) verbunden ist.

10. Ein Verfahren zum Verbinden von vorgefertigten Plattenelementen unter Verwendung des Verbindungssatzes nach den Ansprüchen 1 bis 9, **dadurch gekennzeichnet, dass** es die folgenden Schritte umfasst:
- in einer Vorstufe, die sich bereits im Vorfertigungswerk befindet, wird in das Innere der Struktur jedes vorgefertigten Elements je nach dessen Verwendungszweck und Funktion (Parallelelement oder Eckelement) mindestens eine Steckbuchse (wahlweise Buchse (A) oder Buchse (B) oder Buchse (B₂), die das Basismodul bildet, oder eine Buchse, die das Basismodul mit einem Adapter verwendet) eingefügt, wobei diese Buchse so eingefügt wird, dass die Linie, die entlang der Kontaktkante der verbundenen Elemente verläuft, deren Symmetrieachse ist,
- auf der Baustelle unmittelbar vor dem Verbinden zweier benachbarter Fertigteilelemente diese so zueinander gestellt werden, dass ihre Steckerbuchsen - Buchse (A) oder Buchse (B) oder Buchse (B₂) - auf den gegenüberliegenden Seiten ihrer Symmetrieebene liegen und in der Kontaktebene der zu verbindenden Elemente liegen,
- zum Verbinden der Elemente der Verbinder (S) in einen profilierten Spalt gehämmert wird, dessen Form dem Steckverbinder (S) angepasst ist, wobei der genannte Spalt durch die beiden verbundenen, in den Kontaktebenen der beiden Elemente liegenden Spalte (2a) und (2b) gebildet wird, während zusätzlich bei der Verbindung von senkrechten Elementen das Einschlagen des Verbinders (S) durch zwei zusätzliche Keile (8, 9) erleichtert wird, die durch eine Öffnung (7) in das Innere der quaderförmigen Kammer (5) eingeschlagen werden und so deren Füllung (10) bilden.

## Revendications

1. Kit de connexion pour la fixation d'éléments de panneaux préfabriqués, constituant un raccordement en au moins deux pièces, dont une pièce est positionnée dans la structure d'un élément préfabriqué et l'autre pièce est positionnée dans la structure d'un élément préfabriqué adjacent, ce kit étant équipé d'une prise de courant et d'un connecteur de forme adaptée qui - en s'insérant dans la prise en cours d'utilisation - intègre les deux éléments préfabriqués, **caractérisé en ce que** le kit est constitué de deux prises de courant (A, B), adaptées pour être respectivement encastrées dans l'un des deux éléments de panneaux à relier entre eux (Pa, Pb) et un connecteur plat (S) ressemblant à une lettre U très basse, large et épaisse, ayant le profil d'un plan sinusoïdal courbé, la section transversale du connecteur ayant la forme d'un coin se rétrécissant vers l'extrémité qui est enfoncée dans des douilles de fiche (A, B), tandis que chacune des douilles de fiche (A, B) est équipée d'un élément plat rectangulaire (1a, 1b) situé dans la partie de la douille qui est située dans le plan externe de l'élément de panneau préfabriqué à connecter (Pa, Pb) et a un espace interne (2a, 2b) dont la forme correspond à l'utilisation d'une moitié du connecteur (S), tandis que la partie de la douille de fiche (A, B) située à l'intérieur de l'élément à connecter a une cavité semi-circulaire (3a, 3b) pour recevoir une barre de renforcement (13a, 13b).

2. Kit de connexion selon la revendication 1, **caractérisé en ce que** sa prise de courant (B) et plus particulièrement son élément plat (1b) touche une chambre parallélépipédique (5) encastrée dans un élément de panneau (Pb), constituant une paroi latérale de la chambre (5), le plan avant d'une paroi vide de la chambre (5), formant également le plan extérieur de l'élément de panneau (Pb), comportant un élément de plaque plat rectangulaire (6) dont l'ouverture rectangulaire (7) coïncide avec la surface de la paroi vide avant de la chambre (5).

3. Kit de connexion selon la revendication 2, **caractérisé en ce que** la taille de l'ouverture rectangulaire (7) correspond à la taille de deux coins combinés (8, 9) qui
- après avoir été martelés à l'intérieur de la chambre (5) - forment un remplissage parallélépipédique (10).

4. Kit de connexion selon la revendication 1 ou 2, **caractérisé en ce que** l'espace (2a, 2b) a une surface lisse.

5. Kit de connexion selon la revendication 1 ou 2, **caractérisé en ce que** l'espace (2a, 2b) a une surface ondulée.

6. Kit de connexion selon la revendication 1, **caractérisé en ce que** chacune des prises (A, B) est équipée d'un renforcement supplémentaire sous la forme d'une plaque métallique rectangulaire (11a, 11b), dont la surface est perpendiculaire à la surface d'un élément plat (1a, 1b), formant ainsi un plan de contact des deux prises (A, B).

7. Kit de connexion selon la revendication 6, **caractérisé en ce que** la partie supérieure de chacune des plaques métalliques rectangulaires (11a, 11b) présente un espace étroit (12a, 12b), dont la largeur et la hauteur correspondent à celles de l'espace intérieur (2a, 2b).

8. Kit de connexion selon la revendication 6, **caractérisé en ce que** chacune des prises (A, B) est équipée d'éléments de renforcement constitués de barres de renforcement longitudinales (14a, 14b, 16a, 16b) dont une extrémité est reliée aux plaques métalliques (11a, 11b) et de barres de renforcement transversales (13a, 13b, 15a, 15b), tandis que les extrémités libres de toutes les barres sont pliées à la manière d'un crochet.

9. Kit de connexion selon la revendication 8, **caractérisé en ce que** le renforcement des prises de courant (A, B) est relié à un renforcement (Z) des éléments de panneau (Pa, Pb).

10. Procédé de connexion d'éléments de panneaux préfabriqués à l'aide du kit de raccordement selon les revendications 1 à 9, **caractérisé en ce qu'**il comprend les étapes suivantes :
- à un stade préliminaire, déjà dans l'usine de préfabrication, au moins une prise mâle (éventuellement prise femelle (A) ou prise femelle (B) ou prise femelle (B₂) constituant le module de base ou une prise femelle utilisant le module de base avec un adaptateur) est insérée à l'intérieur de la structure de chaque élément préfabriqué en fonction de son utilisation et de sa fonction prévues (élément parallèle ou élément d'angle), cette prise femelle étant insérée de telle sorte que la ligne qui longe le bord de contact des éléments raccordés soit leur axe de symétrie,
- sur le chantier, immédiatement avant de raccorder deux éléments préfabriqués adjacents, ces éléments sont placés l'un par rapport à l'autre de manière à ce que leurs prises de courant - prise (A) ou prise (B) ou prise (B₂) - soient positionnées sur les côtés opposés de leur plan de symétrie et soient positionnées dans le plan de contact des éléments à raccorder,
- pour raccorder les éléments, le connecteur (S) est enfoncé dans une fente profilée dont la forme correspond à celle du connecteur (S), ladite fente étant formée par les deux fentes raccordées (2a) et (2b), positionnées dans les plans de contact des deux éléments, tandis qu'en outre, dans le cas du raccordement d'éléments perpendiculaires, le processus d'enfoncement du connecteur (S) est facilité par l'utilisation de deux cales supplémentaires (8, 9) qui sont enfoncées à travers une ouverture (7) vers l'intérieur de la chambre cubique (5), formant ainsi son remplissage (10).
